# EUROPEAN PATENT APPLICATION

(11) **EP 4 765 383 A1**
(43) Date of publication of application: **24.06.2026**
(21) Application number: 24866830.3
(22) Date of filing: 16.04.2024
(51) Int. Cl.: H01M 50/184, H01M 50/188, H01M 50/552

(54) **BATTERY CELL, BATTERY AND ELECTRIC DEVICE**

(30) Priority: 18.09.2023 CN 202311203297
(71) Applicant: Contemporary Amperex Technology Co., Limited, Ningde, Fujian 352100 (CN)
(72) Inventor: WU, Kai, Ningde, Fujian 352100 (CN); LIN, Denghua, Ningde, Fujian 352100 (CN); CHEN, Wenwei, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2024/088065
(87) International publication number: WO 2025/060405

(57) **Abstract**

A battery cell, a battery and an electric device, which belongs to the technical field of batteries. The battery cell comprises: a first shell wall, a terminal and an insulating and sealing structure, wherein the terminal comprises a passing portion and a first extending portion; the first extending portion extends to the outside of an outer surface or the inside of an inner surface of the first shell wall; a first corner arranged towards the first shell wall is provided at the connection between the first extending portion and the passing portion; the first shell wall comprises a second corner corresponding to the first corner; the insulating and sealing structure is fitted between the first shell wall and the terminal, and comprises a third corner corresponding to the first corner and a fourth corner corresponding to the second corner; and at least one of the first corner, the second corner, the third corner and the fourth corner is formed as a chamfer.

## Description

### CROSS-REFERENCE TO RELATED APPLICATION

The present application is presented based on Chinese Patent Application No. 202311203297.7 filed on September 18, 2023, and claims the priority to the Chinese Patent Application described above, the content of which is incorporated herein by reference in its entirety.

### TECHNICAL FIELD

The present application relates to the technical field of batteries, and in particular, to a battery cell, a battery, and an electric device.

### BACKGROUND

In recent years, new energy vehicles have developed by leaps and bounds. In the field of electric vehicles, power batteries, as the power source of electric vehicles, play an irreplaceable and important role. The power battery includes several battery cells. However, the reliability of the battery cells needs to be improved.

### SUMMARY

Embodiments of the present application provide a battery cell, a battery, and an electric device, which can improve the reliability of the battery cell.

In a first aspect, the embodiments of the present application provide a battery cell. The battery cell includes a first housing wall, a post terminal, and an insulating and sealing structure, where the first housing wall is provided with a mounting hole; the post terminal includes a penetration part provided in the mounting hole in a penetrating manner and a first extending part connected to the penetration part and extending toward a direction away from a central axis of the mounting hole relative to the penetration part, the first extending part extends to an outer side of an outer surface or an inner side of an inner surface of the first housing wall, a joint between the first extending part and the penetration part is provided with a first corner disposed facing the first housing wall, and the first housing wall includes a second corner disposed corresponding to the first corner; the insulating and sealing structure is fitted between the first housing wall and the post terminal and includes a third corner disposed corresponding to the first corner and a fourth corner disposed corresponding to the second corner, where at least one of the first corner, the second corner, the third corner, and the fourth corner is formed as a chamfer.

In the above technical solutions, when the post terminal is mounted on the first housing wall, the post terminal applies an acting force to the insulating and sealing structure, causing the insulating and sealing structure to compress the first housing wall, and correspondingly, the first housing wall applies a reaction force to the post terminal. In this case, the regions of the insulating and sealing structure corresponding to the first corner and/or the second corner are subject to a relatively large force, making such regions as weak positions prone to cracking. By configuring at least one of the first corner, the second corner, the third corner, and the fourth corner as a chamfer, the force-bearing or force application area can be increased, the acting force applied at the weak positions can be dispersed, and the problem of acting force concentration at the weak positions can be alleviated, thereby reducing the risk of cracking at the weak positions of the insulating and sealing structure, helping to improve the reliability of the insulating and sealing fit between the first housing wall and the post terminal, and improving the reliability of the battery cell.

In some embodiments, at least one of the first corner and the third corner is formed as a chamfer.

In the above technical solutions, when the post terminal is assembled and fixed on the first housing wall, the first corner tends to compress the third corner, causing the insulating and sealing structure to crack from the position of the third corner. If the first corner is configured in the form of a chamfer, the area where the first corner applies force to the third corner can be increased, such that the force application positions are dispersed, thereby reducing the compressive force concentration at the position of the third corner and reducing the risk of cracking of the insulating and sealing structure from the position of the third corner. If the third corner is configured in the form of a chamfer, when the first corner applies force to the third corner, the force-bearing area of the third corner can be increased, such that the force applied to the position of the third corner is dispersed, thereby reducing the risk of cracking of the insulating and sealing structure from the position of the third corner. As such, by forming at least one of the first corner and the third corner as a chamfer, the risk of cracking of the insulating and sealing structure from the position of the third corner can be reduced.

In some embodiments, the first corner and the third corner are both formed as chamfers of a same type.

In the above technical solutions, when the first corner is in contact with the third corner, it facilitates surface contact between the first corner and the third corner, thereby dispersing the force applied to the third corner and alleviating the problem of cracking of the third corner. When the first corner is in a clearance fit with the third corner, it helps to improve the uniformity of the fitting gap between the first corner and the third corner, thereby helping to reduce the compression of the third corner by the first corner and alleviating the problem of cracking of the third corner.

In some embodiments, the first corner and the third corner are both formed as rounded corners, and a rounded corner radius of the third corner is greater than a rounded corner radius of the first corner.

In the above technical solutions, machining the first corner into a rounded corner helps to reduce the machining difficulty of the post terminal. For example, when the first extending part is machined by means of riveting, it is easy to directly form the first corner as a rounded corner. Machining the third corner into a rounded corner and setting the rounded corner radius of the third corner to be greater than the rounded corner radius of the first corner help to increase the fitting gap between the first corner and the third corner, and reduce the compression of the third corner by the first corner, thereby reducing the risk of cracking of the insulating and sealing structure from the position of the third corner. In addition, machining the third corner into a rounded corner helps to alleviate the problem of cracking of the insulating and sealing structure from the third corner during machining, and facilitate detachment and the like.

In some embodiments, a fitting gap is provided between the first corner and the third corner.

In the above technical solutions, the compression of the third corner by the first corner can be reduced to some extent, thereby reducing the risk of cracking of the insulating and sealing structure from the position of the third corner.

In some embodiments, at least one of the second corner and the fourth corner is formed as a chamfer.

In the above technical solutions, when the post terminal is assembled and fixed on the second housing wall, the second corner tends to compress the fourth corner, causing the insulating and sealing structure to crack from the position of the fourth corner. If the second corner is configured in the form of a chamfer, the area where the second corner applies force to the fourth corner can be increased, such that the force application positions are dispersed, thereby reducing the compressive force concentration at the position of the fourth corner and reducing the risk of cracking of the insulating and sealing structure from the position of the fourth corner. If the fourth corner is configured in the form of a chamfer, when the second corner applies force to the fourth corner, the force-bearing area of the fourth corner can be increased, such that the force applied to the position of the fourth corner is dispersed, thereby reducing the risk of cracking of the insulating and sealing structure from the position of the fourth corner. As such, by forming at least one of the second corner and the fourth corner as a chamfer, the risk of cracking of the insulating and sealing structure from the position of the fourth corner can be reduced.

In some embodiments, the second corner and the fourth corner are both formed as chamfers of a same type.

In the above technical solutions, when the second corner is in contact with the fourth corner, it facilitates surface contact between the second corner and the fourth corner, thereby dispersing the force applied to the fourth corner and alleviating the problem of cracking of the fourth corner; when the second corner is in a clearance fit with the fourth comer, it helps to improve the uniformity of the fitting gap between the second corner and the fourth comer, thereby helping to reduce the compression of the fourth corner by the second corner, and alleviating the problem of cracking of the fourth corner.

In some embodiments, a fitting gap is provided between the second corner and the fourth corner.

In the above technical solutions, the compression of the fourth corner by the second corner can be reduced to some extent, thereby reducing the risk of cracking of the insulating and sealing structure from the position of the fourth corner.

In some embodiments, the third corner and the fourth corner are both formed as chamfers, with the third corner being formed as a rounded corner and the fourth corner being formed as an angled chamfer.

In the above technical solutions, by providing chamfers at the positions of the third corner and the fourth corner of the insulating and sealing structure, the problem of cracking of the third corner and the fourth corner can be alleviated, thereby offering more comprehensive protection for the insulating and sealing structure. In addition, it reduces the requirements for whether the first corner and the second corner need to be formed as chamfers, thereby lowering the machining difficulty of the first housing wall and the post terminal. In addition, the third corner is a rounded corner, and the fourth corner is an angled chamfer, such that the wall thickness of the insulating and sealing structure between the third corner and the fourth corner is relatively sufficient, thereby improving the local structural strength of the insulating and sealing structure, further alleviating the problem of cracking, and improving the reliability of insulation and sealing.

In some embodiments, a fitting gap is provided between the penetration part and the insulating and sealing structure.

In the above technical solutions, it is not easy for the penetration part to directly compress the insulating and sealing structure, such that the acting force conducted to the insulating and sealing structure can be reduced, thereby reducing damage to the insulating and sealing structure and protecting the insulating and sealing structure.

In some embodiments, the post terminal is formed into the first extending part through flanging and riveting.

In the above technical solutions, it facilitates the machining of the post terminal and helps to improve the reliability of the connection between the first extending part and the penetration part, thereby improving the reliability of the assembly between the post terminal and the first housing wall.

In some embodiments, the insulating and sealing structure includes a first portion and a second portion integrated into an integrated member, a material hardness of the first portion is less than a material hardness of the second portion, and the first portion defines the third corner and/or the fourth corner.

In the above technical solutions, when the post terminal is assembled and fixed on the first housing wall, the post terminal compresses the insulating and sealing structure. By providing the first portion in at least one corner of the insulating and sealing structure, the first portion can be easily compressed and deformed under the force compared to the second portion, thereby absorbing the force. Therefore, this can reduce the risk of cracking of the insulating and sealing structure.

In some embodiments, the insulating and sealing structure includes a first insulating and sealing member defining the third corner and the fourth corner, where a first gasket is disposed between the first insulating and sealing member and the first extending part, and/or a second gasket is disposed between the first insulating and sealing member and a surface of the first housing wall on a side facing the first extending part, and a material hardness of the second gasket is less than a material hardness of the first insulating and sealing member.

In the above technical solutions, when the post terminal is mounted on the first housing wall and the first extending part compresses the first insulating and sealing member toward the direction of the first housing wall, because the first gasket is disposed between the first insulating and sealing member and the first extending part, the first gasket can reduce part of the acting force, so as to reduce the acting force conducted to the first insulating and sealing member, thereby reducing damage to the first insulating and sealing member and protecting the first insulating and sealing member. When the post terminal is mounted on the first housing wall and the post terminal compresses the first insulating and sealing member toward the direction of the first housing wall, the first insulating and sealing member may conduct the acting force to the second gasket. Due to its relatively small material hardness, the second gasket can undergo compressive deformation to absorb the acting force, thereby reducing the reaction force fed back to the first insulating and sealing member, reducing damage to the first insulating and sealing member, and protecting the first insulating and sealing member.

In some embodiments, the post terminal further includes a second extending part connected to the penetration part and extending toward the direction away from the central axis of the mounting hole relative to the penetration part. The second extending part and the first extending part extend to the inner side and outer side of the first housing wall, respectively. The penetration part and the first extending part constitute a first post terminal part, the penetration part and the second extending part constitute a second post terminal part, the insulating and sealing structure includes the first insulating and sealing member fitted between the first post terminal part and the first housing wall and a second insulating and sealing member fitted between the second post terminal part and the first housing wall, and the second insulating and sealing member is disposed separately from the first insulating and sealing member.

In the above technical solutions, because the post terminal includes the first extending part and the second extending part disposed on the inner side and the outer side of the first housing wall, respectively, the fit between the post terminal and the first housing wall can be more stable and secure. In addition, because the insulating and sealing structure includes the first insulating and sealing member and the second insulating and sealing member that are disposed separately from each other, the first insulating and sealing member and the second insulating and sealing member may be independently mounted, thereby reducing the assembly difficulty and ensuring reliable insulating and sealing fit at all positions between the post terminal and the first housing wall.

In some embodiments, the post terminal includes a post terminal body and a post terminal cover plate. The post terminal body includes the first post terminal part and the second post terminal part, the first extending part extends to the outer side of the outer surface of the first housing wall, the post terminal cover plate lids a side of the first post terminal part distal to the second post terminal part, the post terminal body is connected to the post terminal cover plate by welding, and a material hardness of the second insulating and sealing member is less than the material hardness of the first insulating and sealing member.

In the above technical solutions, the material hardness of the first insulating and sealing member is greater than the material hardness of the second insulating and sealing member. Compared with the first insulating and sealing member, the second insulating and sealing member is more susceptible to compression and deformation and exhibits a better sealing effect. However, the first insulating and sealing member exhibits stronger heat resistance than the second insulating and sealing member. For example, the first insulating and sealing member is a plastic member, and the second insulating and sealing member is a rubber member. Therefore, during the welding of the post terminal body and the post terminal cover plate, the thermal impact on the second insulating and sealing member can be minimized, thereby improving the reliability of the sealing between the first housing wall and the post terminal.

In some embodiments, the first extending part protrudes from the penetration part toward the outer side of the first housing wall to define a recess between the first extending part and the penetration part, an edge of the post terminal cover plate is disposed in the recess and is welded to the penetration part in a penetrating manner, and a welding structure formed by welding is spaced apart from the first extending part.

In the above technical solutions, the shrinkage stress generated by the solidification of the molten pool formed by welding can be blocked by the spaced arrangement, making it difficult or less likely to be conducted to the first extending part. Therefore, this configuration can alleviate the problem of warping of the first extending part and enables the first extending part to press tightly against the insulating and sealing structure, thereby improving the insulation and sealing effect. In addition, because the edge of the post terminal cover plate is disposed in the recess and is welded to the penetration part in a penetrating manner, instead of being butt-welded to the first extending part, it is unnecessary to maintain a small assembly gap between the edge of the post terminal cover plate and the first extending part for butt welding purposes. Therefore, a relatively large spacing may be allowed between the edge of the post terminal cover plate and the first extending part, thereby improving the compatibility of the post terminal body. This is conducive to reducing the machining precision of the post terminal cover plate and the post terminal body.

In some embodiments, the battery cell is provided with an accommodating cavity on an inner side of the first housing wall. The post terminal includes the post terminal body. The post terminal body is provided with an accommodating groove opening in a direction away from the accommodating cavity, and the post terminal body is provided with a communication hole. The communication hole penetrates through a groove wall of the accommodating groove on a side proximal to the accommodating cavity, and communicates the accommodating cavity with the accommodating groove.

In the above technical solutions, when the electrolyte is injected into the battery cell, the electrolyte may be injected into the accommodating groove and then flow toward the accommodating cavity through the communication hole. The accommodating groove can buffer the electrolyte, thereby mitigating issues such as electrolyte splashing and overflow. In addition, the side wall of the accommodating groove can prevent the electrolyte from splashing out to some extent, thereby reducing external contamination caused by the electrolyte and facilitating fast electrolyte injection. In addition, because no separate liquid injection channel needs to be formed on the housing, special machining of the housing is unnecessary, which helps to lower the structural complexity and machining difficulty of the housing.

In some embodiments, the battery cell includes a battery cell assembly. The battery cell assembly includes an active substance-coated part received in the accommodating cavity and a conductive part connected to the active substance-coated part, and the conductive part is provided in the communication hole in a penetrating manner to be at least partially received in the accommodating groove.

In the above technical solutions, by at least partially receiving the conductive part in the accommodating groove, the conductive part can at least partially occupy the space in the accommodating groove, thereby reducing the space in the accommodating cavity occupied by the conductive part, and saving the space in the accommodating cavity to receive a larger volume of the active substance-coated part. This is conducive to increasing the energy density of the battery cell, or to reducing the dimension of the battery cell when the energy density of the battery cell remains unchanged.

In some embodiments, the post terminal includes the post terminal cover plate lidding the post terminal body. The post terminal cover plate is provided with a liquid injection hole capable of communicating with the accommodating groove. The battery cell further includes a sealing structure configured to seal the liquid injection hole.

In the above technical solutions, by forming the liquid injection hole on the post terminal cover plate with a relatively small opening and an outer position, reliable sealing of the liquid injection inlet can be more easily achieved through the sealing structure, thereby improving the working reliability of the battery cell and enabling flexible and diversified designs of the sealing structure.

In a second aspect, the embodiments of the present application further provide a battery. The battery includes the battery cell according to any one of the above solutions.

In the above technical solutions, the reliability of the battery cell according to the embodiments of the present application is improved, thereby being beneficial for improving the performance of the battery.

In a third aspect, the embodiments of the present application further provide an electric device. The electric device includes the battery according to any one of the above solutions.

In the above technical solutions, because the performance of the battery is improved, it helps to improve the operational electrical performance of the electric device.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a structural schematic view of a vehicle according to some embodiments of the present application;
FIG. 2 is an exploded view of the structure of a battery according to some embodiments of the present application;
FIG. 3 is a structural schematic view of a battery cell according to some embodiments of the present application;
FIG. 4 is an orthographic projection view of a battery cell according to some embodiments of the present application;
FIG. 5 is a cross-sectional view along line A-A in FIG. 4;
FIG. 6 is a partially enlarged view of the circled portion B in FIG. 5;
FIG. 7 is a partial cross-sectional view of a battery cell according to some embodiments of the present application;
FIG. 8 is a partially enlarged view of the circled portion C in FIG. 7;
FIG. 9 is a partial cross-sectional view of a battery cell according to some embodiments of the present application;
FIG. 10 is a structural schematic view of an insulating and sealing structure according to some embodiments of the present application;
FIG. 11 is a structural schematic view of an insulating and sealing structure according to some other embodiments of the present application;
FIG. 12 is a partial cross-sectional view of a battery cell according to some embodiments of the present application;
FIG. 13 is a partial cross-sectional view of a battery cell according to some embodiments of the present application;
FIG. 14 is a partial cross-sectional view of a battery cell according to some embodiments of the present application; and
FIG. 15 is a schematic view illustrating the fit between a battery cell and a busbar component according to some embodiments of the present application.

Reference numerals: vehicle 1000; first direction X; second direction Y; third direction Z; battery 100; controller 200; motor 300; case 101; first case body 1011; second case body 1012; battery cell 102; busbar component 103; housing 1; accommodating cavity 11; mounting hole 12; central axis L; first housing wall 13; second corner 131; second housing wall 14; post terminal 2; post terminal body 3; recess 31; first extending part 32; penetration part 33; first corner 34; first post terminal part 35; accommodating groove 36; communication hole 37; second extending part 38; second post terminal part 39; post terminal cover plate 4; liquid injection hole 43; sealing structure 6; first sealing member 61; second sealing member 62; battery cell assembly 7; active substance-coated part 71; conductive part 72; insulating and sealing structure 8; third corner 81; fourth corner 82; first portion 83; first sub-part 831; second sub-part 832; second portion 84; first insulating and sealing member 85; second insulating and sealing member 86; third insulating and sealing member 87; first gasket 91; second gasket 92.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those of ordinary skill in the art to which the present application belongs. The terms used in the specification of the present application are only used to describe specific embodiments and are not intended to limit the present application. The terms "include", "comprise", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "link", "connect", and "attach" shall be construed broadly and may be, for example, fixed connection, detachable connection, or integrated connection, or direct connection, indirect connection via an intermediate, or internal communication between two elements. For those of ordinary skill in the art, the specific meanings of the aforementioned terms in the present application can be understood according to specific conditions.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not impose any limitation on the present application.

The term "plurality of" used in the present application refers to more than two (including two).

In the present application, battery cells may include lithium-ion secondary batteries, lithium-ion primary batteries, lithium-sulfur batteries, sodium-lithium-ion batteries, sodium-ion batteries, magnesium-ion batteries, and the like. This is not limited in the embodiments of the present application. Battery cells may be cylindrical, flat, rectangular parallelepiped-shaped, or the like, which is also not limited in the embodiments of the present application. According to the packaging method, battery cells are typically divided into three types: cylindrical battery cells, square battery cells, and pouch battery cells, which are not limited in the embodiments of the present application.

The battery mentioned in the embodiments of the present application refers to a single physical module including one or a plurality of battery cells to provide higher voltage and capacity. For example, the battery mentioned in the present application may include a battery module group, a battery pack, or the like. A battery module group generally includes a plurality of battery cells. A battery pack generally includes a case configured to encapsulate one or a plurality of battery cells or one or a plurality of battery module groups. The case can prevent liquid or other foreign matters from affecting the charging or discharging of the battery cells.

The battery cell includes a housing, a battery cell assembly, and an electrolyte, where the housing is configured to accommodate the battery cell assembly and the electrolyte. The battery cell assembly includes at least one electrode assembly, where the electrode assembly is composed of a positive electrode plate, a negative electrode plate, and a separator, and the electrode assembly may be of a wound structure, a stacked structure, or the like. A battery cell primarily works by the movement of metal ions between the positive electrode plate and the negative electrode plate.

The positive electrode plate may generally include a positive electrode current collector and a positive electrode active substance layer. The positive electrode active substance layer is directly or indirectly applied to the positive electrode current collector. The positive electrode current collector that is not coated with the positive electrode active substance layer protrudes from the positive electrode current collector coated with the positive electrode active substance layer. The positive electrode current collector that is not coated with the positive electrode active substance layer serves as a positive electrode tab. Taking lithium-ion batteries as an example, the material of the positive electrode current collector may be aluminum, and the material of the positive electrode active substance layer may be lithium cobaltate, lithium iron phosphate, ternary lithium, lithium manganate, or the like.

The negative electrode plate may generally include a negative electrode current collector and a negative electrode active substance layer. The negative electrode active substance layer is directly or indirectly applied to the negative electrode current collector. The negative electrode current collector that is not coated with the negative electrode active substance layer protrudes from the negative electrode current collector coated with the negative electrode active substance layer. The negative electrode current collector that is not coated with the negative electrode active substance layer serves as a negative electrode tab. The material of the negative electrode current collector may be copper, and the material of the negative electrode active substance layer may be carbon, silicon, or the like.

In order to ensure the passing of a large current without fusing, a plurality of positive electrode tabs are provided and are stacked together to form a tab part of the positive electrode, and a plurality of negative electrode tabs are provided and are stacked together to form a tab part of the negative electrode. Post terminals are disposed on the housing. The tab part of the positive electrode is electrically connected to the post terminal of the positive electrode, and the tab part of the negative electrode is electrically connected to the post terminal of the negative electrode. For example, the tab part may be connected to the post terminal to form a direct electrical connection between the tab part and the post terminal. For another example, the battery cell assembly may include an adapting piece, the tab part is connected to the adapting piece, and the adapting piece is connected to the post terminal to form an indirect electrical connection between the tab part and the post terminal.

The material of the separator is not limited, such as polypropylene or polyethylene.

In some battery cells in the related art, the post terminal is mounted on the housing by means of riveting. To achieve the insulation and sealing between the housing and the post terminal, an insulating plastic is generally provided between the post terminal and the housing before riveting the post terminal. However, during riveting of the post terminal, the post terminal is deformed under the force and compresses the insulating plastic. Thus, the weak part of the insulating plastic is prone to cracking under the force. Once the insulating plastic cracks, the reliability of the insulation and sealing between the housing and the post terminal will be affected, resulting in a decrease in the reliability of the battery cell.

To this end, the embodiments of the present application provide a battery cell. The battery cell includes: a housing, a post terminal, and an insulating and sealing structure. The housing includes a first housing wall. The first housing wall is provided with a mounting hole, and the post terminal includes a penetration part and a first extending part, where the penetration part is provided in the mounting hole in a penetrating manner, and the first extending part is connected to the penetration part and extends toward a direction away from a central axis of the mounting hole relative to the penetration part, and the first extending part extends to an outer side of an outer surface or an inner side of an inner surface of the first housing wall. A joint between the first extending part and the penetration part is provided with a first corner disposed facing the first housing wall. The first housing wall includes a second corner disposed corresponding to the first corner. The insulating and sealing structure is fitted between the first housing wall and the post terminal, and includes a third corner disposed corresponding to the first corner and a fourth corner disposed corresponding to the second corner, and at least one of the first corner, the second corner, the third corner, and the fourth corner is formed as a chamfer.

As such, when the post terminal is mounted on the first housing wall, the post terminal applies an acting force to the insulating and sealing structure, and correspondingly, the first housing wall applies a reaction force to the insulating and sealing structure. In this case, the regions of the insulating and sealing structure corresponding to the first corner and/or the second corner are subject to a relatively large force, making such regions as weak positions prone to cracking. By configuring at least one of the first corner, the second corner, the third corner, and the fourth corner as a chamfer, the force-bearing or force application area can be increased, the acting force applied at the weak positions can be dispersed, and the problem of acting force concentration at the weak positions can be alleviated, thereby reducing the risk of cracking at the weak positions of the insulating and sealing structure, helping to improve the reliability of the insulating and sealing fit between the first housing wall and the post terminal, and improving the reliability of the battery cell.

The embodiments of the present application provide an electric device using a battery as a power source. The electric device may be, but is not limited to, a mobile phone, a tablet, a laptop computer, an electric toy, an electric tool, an electric bicycle, an electric vehicle, a ship, a spacecraft, and the like. The electric toys may include stationary or mobile electric toys, such as game consoles, electric car toys, electric ship toys, or electric airplane toys. The spacecrafts may include airplanes, rockets, space shuttles, spaceships, etc.

For ease of description, the present application is illustrated by taking a vehicle 1000 as an example of the electric device according to an embodiment of the present application.

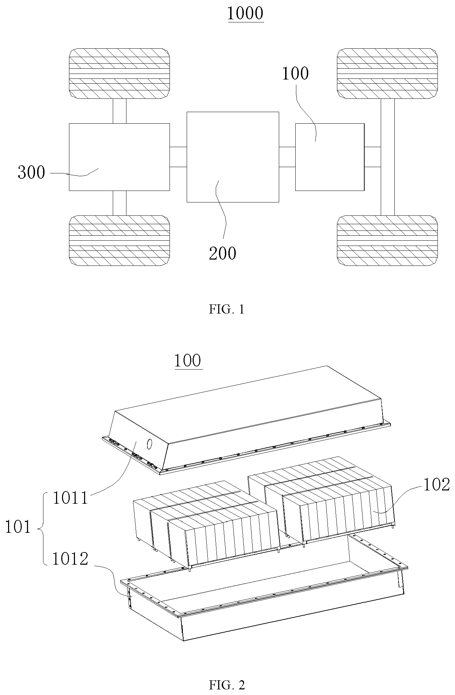

As shown in FIG. 1, FIG. 1 is a structural schematic view of a vehicle 1000 according to some embodiments of the present application. The vehicle 1000 may be a fuel vehicle, a gas vehicle or a new energy vehicle. The new energy vehicle may be a pure electric vehicle, a hybrid vehicle, an extended-range vehicle, or the like. A battery 100 is provided inside the vehicle 1000, and the battery 100 may be provided at the bottom, head, or tail of the vehicle 1000. The battery 100 may be configured to power the vehicle 1000. For example, the battery 100 may serve as an operation power source of the vehicle 1000. The vehicle 1000 may further include a controller 200 and a motor 300. The controller 200 is configured to control the battery 100 to power the motor 300, e.g., for operation power needed by the vehicle 1000 for start-up, navigation, and driving.

In some embodiments of the present application, the battery 100 may not only serve as an operation power source for the vehicle 1000, but also as a driving power source for the vehicle 1000 to, instead of or in part instead of fuel or natural gas, provide driving power for the vehicle 1000.

Referring to FIG. 2, FIG. 2 is an exploded view of the structure of a battery 100 according to some embodiments of the present application. The battery 100 includes a case 101 and a plurality of battery cells 102, and the battery cells 102 are accommodated in the case 101. The case 101 is configured to provide an assembly space for the battery cells 102, and the case 101 may be in various structures. In some embodiments, the case 101 may include a first case body 1011 and a second case body 1012. The first case body 1011 and the second case body 1012 are mutually lidded onto each other. The first case body 1011 and the second case body 1012 jointly define an assembly space for accommodating the battery cells 102. The second case body 1012 may be of a hollow structure with one end open, and the first case body 1011 may be of a plate-shaped structure. The first case body 1011 is lidded onto the open side of the second case body 1012, such that the first case body 1011 and the second case body 1012 jointly define an assembly space; the first case body 1011 and the second case body 1012 may also both be of a hollow structure with one side open, and the open side of the first case body 1011 is lidded onto the open side of the second case body 1012. Certainly, the case 101 formed by the first case body 1011 and the second case body 1012 may be in various shapes, such as a cylinder and a rectangular parallelepiped.

In the battery 100, the plurality of battery cells 102 may be connected in series, in parallel, or in series-parallel. The series-parallel connection means that both series connection and parallel connection are present for the connection among the plurality of battery cells 102. The plurality of battery cells 102 may be directly connected in series, in parallel, or in series-parallel, and then the whole formed by the plurality of battery cells 102 is accommodated in the case 101. Certainly, the situation may be that in the battery 100, the plurality of battery cells 102 are first connected in series, in parallel, or in series-parallel to form battery modules, and then the plurality of battery modules are connected in series, in parallel, or in series-parallel to form a whole and accommodated in the case 101. The battery 100 may further include other structures. For example, the battery 100 may further include a busbar component for achieving electrical welding between the plurality of battery cells 102.

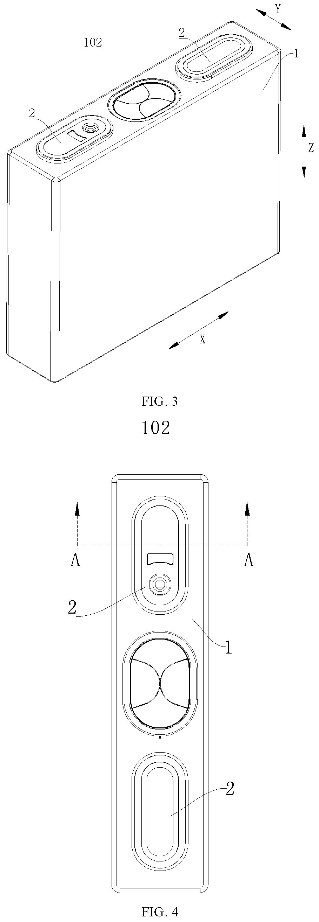

Each battery cell 102 may be a secondary battery or a primary battery; it may also be a lithium-sulfur battery, a sodium-ion battery, or a magnesium-ion battery, but is not limited thereto. The battery cell 102 may be cylindrical, flat, rectangular parallelepiped-shaped, or the like. For example, referring to the embodiment shown in FIG. 3, the length direction of the battery cell 102 is a first direction X, the width direction of the battery cell 102 is a second direction Y, the height direction of the battery cell 102 is a third direction Z, and the first direction X, the second direction Y, and the third direction Z are mutually perpendicular to each other.

In some embodiments of the present application, with reference to FIGs. 3 to 6, the battery cell 102 includes: a housing 1 and post terminals 2. The post terminals 2 are disposed on the housing 1, and an accommodating cavity 11 is formed inside the housing 1. Illustratively, the battery cell 102 includes a battery cell assembly 7. The battery cell assembly 7 may include an active substance-coated part 71 and a conductive part 72 connected to the active substance-coated part 71. The active substance-coated part 71 is received in the accommodating cavity 11, and the conductive part 72 is welded to the post terminal 2, such that the conductive part 72 is electrically connected between the active substance-coated part 71 and the post terminal 2.

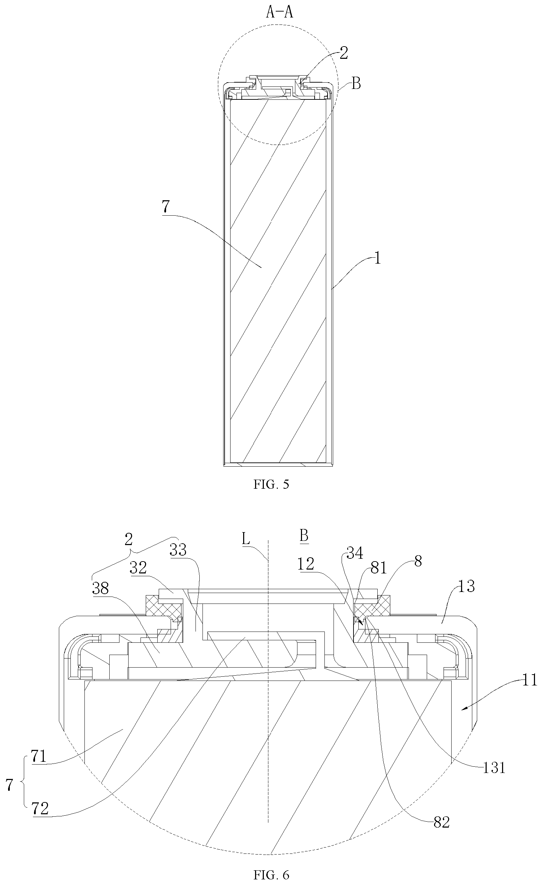

With reference to FIGs. 5 and 6, the housing 1 includes a first housing wall 13. The first housing wall 13 is provided with a mounting hole 12. The post terminal 2 is provided in the mounting hole 12 in a penetrating manner to be mounted on the first housing wall 13. The post terminal 2 includes a penetration part 33 and a first extending part 32. The penetration part 33 is provided in the mounting hole 12 in a penetrating manner, that is, the penetration part 33 is at least partially located in the mounting hole 12. The axial direction of the mounting hole 12 is used as the projection direction, and the plane perpendicular to the axial direction of the mounting hole 12 is used as the projection plane. The projection of the penetration part 33 on the projection plane falls within the projection range of the mounting hole 12 on the projection plane, thereby enabling the penetration part 33 to be provided in the mounting hole 12 in a penetrating manner.

With reference to FIGs. 5 and 6, the first extending part 32 is connected to the penetration part 33 and extends toward a direction away from a central axis L of the mounting hole 12 relative to the penetration part 33, and the first extending part 32 extends to an outer side of an outer surface or an inner side of an inner surface of the first housing wall 13. Two side surfaces of the first housing wall 13 in a wall thickness direction are the outer surface and the inner surface, respectively. The inner surface is a surface of the first housing wall 13 on a side facing the accommodating cavity 11, and the outer surface is a surface of the first housing wall 13 on a side distal to the accommodating cavity 11. The side of the outer surface distal to the accommodating cavity 11 is referred to as the outer side of the outer surface, and the side of the inner surface facing the accommodating cavity 11 is referred to as the inner side of the inner surface. The expression "the first extending part 32 extends to an outer side of an outer surface or an inner side of an inner surface of the first housing wall 13" means that the first extending part 32 at least partially faces the first housing wall 13, the axial direction of the mounting hole 12 is used as the projection direction, the plane perpendicular to the axial direction of the mounting hole 12 is used as the projection plane, the projection of the first extending part 32 on the projection plane and the projection of the first housing wall 13 on the projection plane have an overlapping region, and the portion of the first extending part 32 corresponding to the overlapping region faces the first housing wall 13.

With reference to FIGs. 5 and 6, the battery cell 102 further includes an insulating and sealing structure 8 fitted between the first housing wall 13 and the post terminal 2, that is, the insulating and sealing structure 8 is at least partially sandwiched between the first housing wall 13 and the post terminal 2, such that the post terminal 2 is indirectly fitted with the first housing wall 13 through the insulating and sealing structure 8, thereby achieving insulation and sealing between the first housing wall 13 and the post terminal 2.

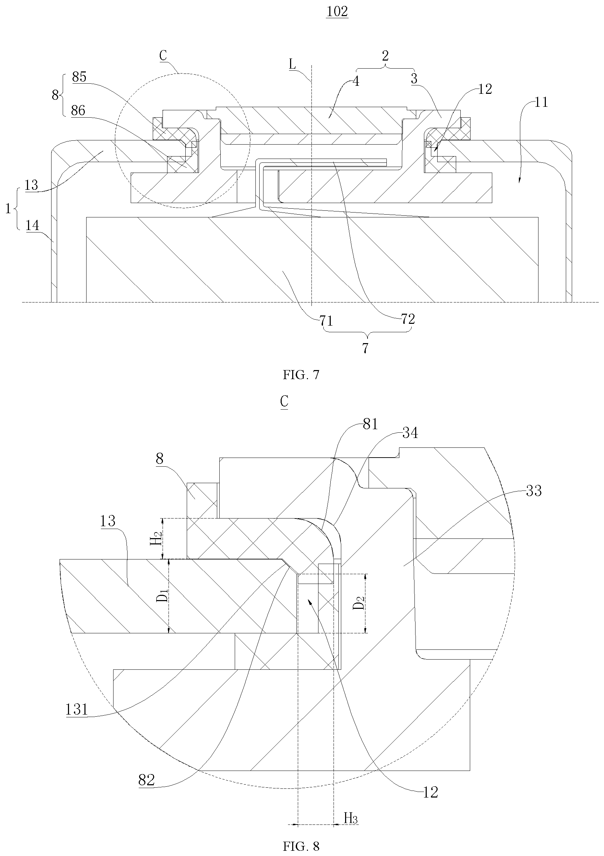

As shown in FIGs. 6 and 7, a joint between the first extending part 32 and the penetration part 33 is provided with a first corner 34 disposed facing the first housing wall 13, that is, the first corner 34 is formed on a side of the joint between the first extending part 32 and the penetration part 33 proximal to the first housing wall 13. The first housing wall 13 includes a second corner 131 disposed corresponding to the first corner 34, that is, the corner of the first housing wall 13 proximal to the first corner 34 is the second corner 131. The insulating and sealing structure 8 includes a third corner 81 disposed corresponding to the first corner 34 and a fourth corner 82 disposed corresponding to the second corner 131, and at least one of the first corner 34, the second corner 131, the third corner 81, and the fourth corner 82 is formed as a chamfer. The chamfer may be a rounded corner or an angled chamfer, which is not limited herein.

As such, by replacing the right angle with a chamfer, the force-bearing or force application area can be increased, thereby reducing local pressure and stress concentration. This can reduce the risk of cracking at vulnerable positions of the insulating and sealing structure 8, such as the third corner 81 and/or the fourth corner 82, and enhance the structural stability of the insulating and sealing structure 8, thereby improving the reliability of the insulation and sealing effect of the insulating and sealing structure 8.

Therefore, according to the above embodiments of the present application, when the post terminal 2 is mounted on the first housing wall 13, the post terminal 2 applies an acting force to the insulating and sealing structure 8, and correspondingly, the first housing wall 13 applies a reaction force to the insulating and sealing structure 8. In this case, the regions of the insulating and sealing structure 8 corresponding to the first corner 34 and/or the second corner 131 are subject to a relatively large force, making such regions as weak positions prone to cracking. By configuring at least one of the first corner 34, the second corner 131, the third corner 81, and the fourth corner 82 as a chamfer, the force-bearing or force application area can be increased, the acting force applied at the weak positions can be dispersed, and the problem of acting force concentration at the weak positions can be alleviated, thereby reducing the risk of cracking at the weak positions of the insulating and sealing structure 8, helping to improve the reliability of the insulating and sealing fit between the first housing wall 13 and the post terminal 2, and improving the reliability of the battery cell 102.

In some embodiments of the present application, as shown in FIG. 6, the post terminal 2 is formed into the first extending part 32 through flanging and riveting. That is, after the post terminal 2 is assembled into the mounting hole 12 through the penetration part 33, the flanging and riveting process is adopted to form the first extending part 32. As such, this facilitates the machining of the post terminal 2 and helps to improve the reliability of the connection between the first extending part 32 and the penetration part 33, thereby improving the reliability of the assembly between the post terminal 2 and the first housing wall 13.

Certainly, the present application is not limited thereto. For example, in other embodiments of the present application, the post terminal 2 may also be formed by welding two portions together. For example, the two portions are assembled into the mounting holes 12, respectively, and then welded together.

In some embodiments, as shown in FIGs. 7 and 8, at least one of the first corner 34 and the third corner 81 is formed as a chamfer. That is, only the first corner 34 may be formed as a chamfer, while the third corner 81 is formed as a non-chamfered corner, e.g., a right angle, an acute angle, or an obtuse angle; or, only the third corner 81 may be formed as a chamfer, while the first corner 34 is formed as a non-chamfered corner, e.g., a right angle, an acute angle, or an obtuse angle; or, both the first corner 34 and the third corner 81 are formed as chamfers.

When the post terminal 2 is assembled and fixed on the first housing wall 13, the first corner 34 tends to compress the third corner 81, causing the insulating and sealing structure 8 to crack from the position of the third corner 81. If the first corner 34 is configured in the form of a chamfer, the area where the first corner 34 applies force to the third corner 81 can be increased, such that the force application positions are dispersed, thereby reducing the compressive force concentration at the position of the third corner 81 and reducing the risk of cracking of the insulating and sealing structure 8 from the position of the third corner 81. If the third corner 81 is configured in the form of a chamfer, when the first corner 34 applies force to the third corner 81, the force-bearing area of the third corner 81 can be increased, such that the force applied to the position of the third corner 81 is dispersed, thereby reducing the risk of cracking of the insulating and sealing structure 8 from the position of the third corner 81.

As such, by forming at least one of the first corner 34 and the third corner 81 as a chamfer, the risk of cracking of the insulating and sealing structure 8 from the position of the third corner 81 can be reduced.

In some embodiments of the present application, as shown in FIGs. 7 and 8, the first corner 34 and the third corner 81 are both formed as chamfers of a same type. That is, both the first corner 34 and the third corner 81 are angled chamfers, or both the first corner 34 and the third corner 81 are rounded corners. As such, when the first corner 34 is in contact with the third corner 81, it facilitates surface contact between the first corner 34 and the third corner 81, thereby dispersing the force applied to the third corner 81 and alleviating the problem of cracking of the third corner 81. When the first corner 34 is in a clearance fit with the third corner 81, it helps to improve the uniformity of the fitting gap between the first corner 34 and the third corner 81, thereby helping to reduce the compression of the third corner 81 by the first corner 34 and alleviating the problem of cracking of the third corner 81. Certainly, the present application is not limited thereto. For example, in other embodiments, the first corner 34 and the third corner 81 may also be configured to be of different types. For example, one of the first corner 34 and the third corner 81 is an angled chamfer, and the other is a rounded corner.

Illustratively, as shown in FIGs. 7 and 8, the first corner 34 and the third corner 81 are both formed as rounded corners, and a rounded corner radius of the third corner 81 is greater than a rounded corner radius of the first corner 34. As such, machining the first corner 34 into a rounded corner helps to lower the machining difficulty of the post terminal 2. For example, when the first extending part 32 is machined by means of riveting, it is easy to directly form the first corner 34 as a rounded corner. Machining the third corner 81 into a rounded corner and setting the rounded corner radius of the third corner 81 to be greater than the rounded corner radius of the first corner 34 helps to increase the fitting gap between the first corner 34 and the third corner 81, and reduce the compression of the third corner 81 by the first corner 34, thereby reducing the risk of cracking of the insulating and sealing structure 8 from the position of the third corner 81. In addition, machining the third corner 81 into a rounded corner helps to alleviate the problem of cracking of the insulating and sealing structure 8 from the third corner 81 during machining, and facilitate detachment and the like.

In some embodiments of the present application, as shown in FIGs. 7 and 8, regardless of whether at least one of the first corner 34 and the third corner 81 is machined into the form of a chamfer, a fitting gap may be provided between the first corner 34 and the third corner 81. In this way, the compression of the third corner 81 by the first corner 34 can be reduced to some extent, thereby reducing the risk of cracking of the insulating and sealing structure 8 from the position of the third corner 81.

In some embodiments, as shown in FIGs. 7 and 8, at least one of the second corner 131 and the fourth corner 82 is formed as a chamfer. That is, only the second corner 131 may be formed as a chamfer, while the fourth corner 82 is formed as a non-chamfered corner, e.g., a right angle, an acute angle, or an obtuse angle; or, only the fourth corner 82 may be formed as a chamfer, while the second corner 131 is formed as a non-chamfered corner, e.g., a right angle, an acute angle, or an obtuse angle; or, both the second corner 131 and the fourth corner 82 are formed as chamfers.

When the post terminal 2 is assembled and fixed on the first housing wall 13, the second corner 131 tends to compress the fourth corner 82, causing the insulating and sealing structure 8 to crack from the position of the fourth corner 82. If the second corner 131 is configured in the form of a chamfer, the area where the second corner 131 applies force to the fourth corner 82 can be increased, such that the force application positions are dispersed, thereby reducing the compressive force concentration at the position of the fourth corner 82 and reducing the risk of cracking of the insulating and sealing structure 8 from the position of the fourth corner 82. If the fourth corner 82 is configured in the form of a chamfer, when the second corner 131 applies force to the fourth corner 82, the force-bearing area of the fourth corner 82 can be increased, such that the force applied to the position of the fourth corner 82 is dispersed, thereby reducing the risk of cracking of the insulating and sealing structure 8 from the position of the fourth corner 82.

As such, by forming at least one of the second corner 131 and the fourth corner 82 as a chamfer, the risk of cracking of the insulating and sealing structure 8 from the position of the fourth corner 82 can be reduced.

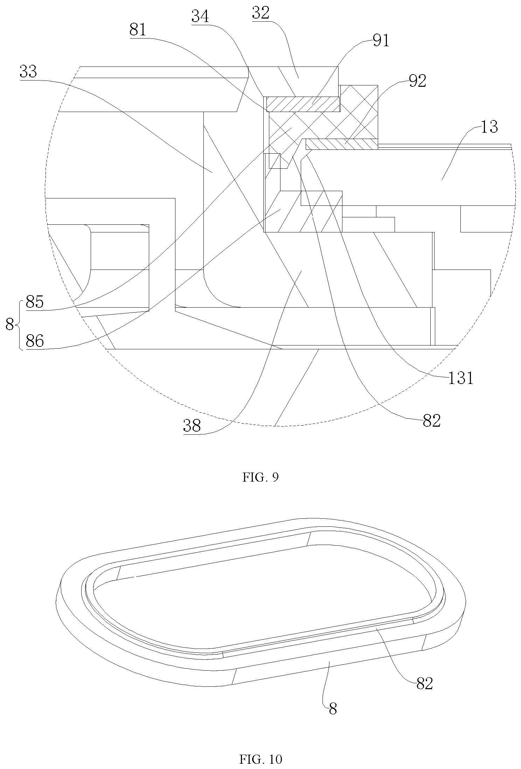

In some embodiments of the present application, as shown in FIGs. 7 and 8, the second corner 131 and the fourth corner 82 are both formed as chamfers of the same type. That is, both the second corner 131 and the fourth corner 82 are angled chamfers, or both the second corner 131 and the fourth corner 82 are rounded corners. As such, when the second corner 131 is in contact with the fourth corner 82, it facilitates surface contact between the second corner 131 and the fourth corner 82, thereby dispersing the force applied to the fourth corner 82 and alleviating the problem of cracking of the fourth corner 82. When the second corner 131 is in clearance fit with the fourth corner 82, it helps to enhance the uniformity of the fitting gap between the second corner 131 and the fourth corner 82, thereby helping to reduce the compression of the fourth corner 82 by the second corner 131 and alleviating the problem of cracking of the fourth corner 82. Certainly, the present application is not limited thereto. For example, in other embodiments, the second corner 131 and the fourth corner 82 may also be configured to be of different types. For example, with reference to FIG. 9, one of the second corner 131 and the fourth corner 82 is an angled chamfer, and the other is a rounded corner.

Illustratively, as shown in FIGs. 7 and 8, the second corner 131 and the fourth corner 82 are both formed as angled chamfers. As such, machining the second corner 131 into an angled chamfer helps to lower the machining difficulty of the first housing wall 13. In addition, the fourth corner 82 is also machined into an angled chamfer, which helps to improve the stability and compactness of the fit between the first housing wall 13 and the insulating and sealing structure 8, thereby improving the insulation and sealing effect.

In some embodiments of the present application, as shown in FIGs. 7 and 8, regardless of whether at least one of the second corner 131 and the fourth corner 82 is machined into a chamfer, a fitting gap may be provided between the second corner 131 and the fourth corner 82. In this way, the compression of the fourth corner 82 by the second corner 131 can be reduced to some extent, thereby reducing the risk of cracking of the insulating and sealing structure 8 from the position of the fourth corner 82.

Illustratively, as shown in FIGs. 7 and 8, the third corner 81 and the fourth corner 82 are both formed as chamfers. As such, by providing chamfers at the positions of the third corner 81 and the fourth corner 82 of the insulating and sealing structure 8, the problem of cracking of the third corner 81 and the fourth corner 82 can be alleviated, thereby offering more comprehensive protection for the insulating and sealing structure 8. In addition, it reduces the requirements for whether the first corner 34 and the second corner 131 need to be machined as chamfers, thereby lowering the machining difficulty of the first housing wall 13 and the post terminal 2.

Illustratively, as shown in FIGs. 7 and 8, the third corner 81 is a rounded corner, and the fourth corner 82 is an angled chamfer, such that the wall thickness of the insulating and sealing structure 8 between the third corner 81 and the fourth corner 82 is relatively sufficient, thereby improving the local structural strength of the insulating and sealing structure 8, further alleviating the problem of cracking, and improving the reliability of the insulating and sealing. Or, the fourth corner 82 may be configured as a rounded corner, and the third corner 81 is configured as an angled chamfer. Or, the third corner 81 and the fourth corner 82 may both be configured as angled chamfers or rounded corners.

In addition, when the third corner 81 is formed as a rounded corner, if the first corner 34 is configured to be in the same chamfer form as the rounded corner of the third corner 81, the first corner 34 may also be formed as a rounded corner, thereby helping to lower the machining difficulty of the post terminal 2. For example, when the first extending part 32 is machined by means of riveting, it is easy to directly form the first corner 34 as a rounded corner.

Besides, when the fourth corner 82 is formed as an angled chamfer, if the second corner 131 is configured to be in the same chamfer form as the fourth corner 82, the second corner 131 may also be formed as an angled chamfer, thereby helping to lower the machining difficulty of the first housing wall 13 and improve the stability and compactness of the fit between the first housing wall 13 and the insulating and sealing structure 8, and thus improving the insulation and sealing effect.

Illustratively, as shown in FIG. 8, the wall thickness of the insulating and sealing structure 8 between the first extending part 32 and the first housing wall 13 is H₂, and the wall thickness of the insulating and sealing structure 8 located between the penetration part 33 and the first housing wall 13 is H₃. When the third corner 81 and the fourth corner 82 are both formed as chamfers, the wall thickness of the insulating and sealing structure 8 between the third corner 81 and the fourth corner 82 may be greater than or equal to 1.1 H₂or 1.1 H₃, thereby alleviating the problem of cracking of the insulating and sealing structure 8 due to insufficient local structural strength caused by the formation of the third corner 81 and the fourth corner 82.

Illustratively, the third corner 81 and the fourth corner 82 are both rounded corners, the chamfer dimension of the fourth corner 82 is R₁, and the chamfer dimension of the third corner 81 is R₂, where R₂ - R₁ ≤ 2H₂, and R₂ - R₁ ≤ 2H₃, such that the wall thickness of the insulating and sealing structure 8 between the third corner 81 and the fourth corner 82 is relatively sufficient, thereby alleviating the problem of cracking of the insulating and sealing structure 8 due to insufficient local structural strength caused by the formation of the third corner 81 and the fourth corner 82.

Illustratively, the third corner 81 and the fourth corner 82 are both angled chamfers, the chamfer dimension of the fourth corner 82 is C₁, and the chamfer dimension of the third corner 81 is C₂, where C₂ - C₁ ≤ 2H₂, and C₂ - C₁ ≤ 2H₃, such that the wall thickness of the insulating and sealing structure 8 between the third corner 81 and the fourth corner 82 is relatively sufficient, thereby alleviating the problem of cracking of the insulating and sealing structure 8 due to insufficient local structural strength caused by the formation of the third corner 81 and the fourth corner 82.

As shown in FIG. 8, when the second comer 131 is formed as a chamfer, the wall thickness of the first housing wall 13 is reduced at the position where the mounting hole 12 is defined. In some embodiments, the wall thickness of the first housing wall 13 is D₁, and the minimum wall thickness of the first housing wall 13 at the second comer 131 is D₂, where D2 may be set to be greater than 20% of D1, so as to avoid the problem that the local deformation of the first housing wall 13 caused by insufficient strength leads to the insufficient compression amount of the insulating and sealing structure 8, for example, leading to the problem that the insufficient compression amount of a second insulating member affects the sealing.

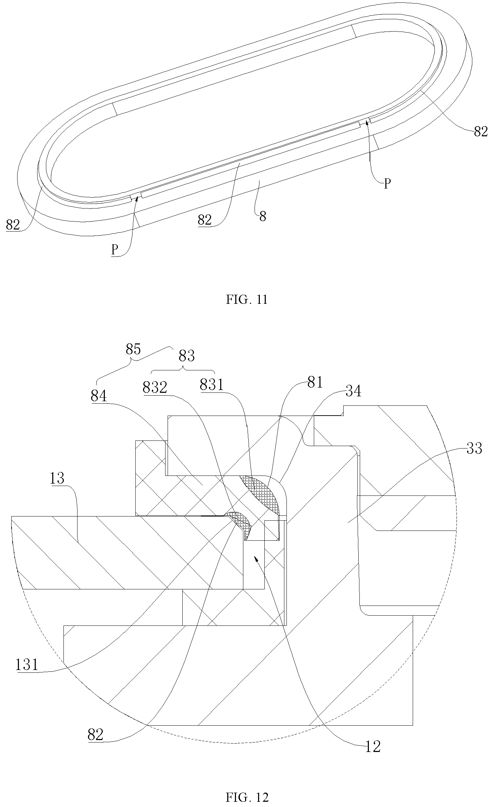

When the insulating and sealing structure 8 is formed as an annular structure surrounding the central axis L of the mounting hole 12, and the fourth corner 82 is formed as a chamfer, in some embodiments, as shown in FIG. 10, the fourth corner 82 on the entire periphery in the circumferential direction of the insulating and sealing structure 8 may be formed as a chamfer. Alternatively, in some embodiments, as shown in FIG. 11, the fourth corner 82 at a local portion in the circumferential direction of the insulating and sealing structure 8 may also be a chamfer, while at the remaining positions be a right angle, an acute angle, or an obtuse angle. In addition, the chamfer types of the fourth corner 82 at different positions of the circumferential direction of the insulating and sealing structure 8 may be the same or different. For example, the fourth corner 82 on the entire periphery in the circumferential direction of the insulating and sealing structure 8 may be a rounded corner, or the fourth corner 82 on the entire periphery in the circumferential direction of the insulating and sealing structure 8 may be an angled chamfer, or the fourth corner 82 at some positions in the circumferential direction of the insulating and sealing structure 8 is a rounded corner, while at remaining positions is an angled chamfer, or the like.

When the insulating and sealing structure 8 is formed as an annular structure surrounding the central axis L of the mounting hole 12, and the third corner 81 is formed as a chamfer, in some embodiments, the third corner 81 on the entire periphery in the circumferential direction of the insulating and sealing structure 8 may be formed as a chamfer; or in some embodiments, the third corner 81 at a local portion in the circumferential direction of the insulating and sealing structure 8 may also be a chamfer, while at the remaining positions be a right angle, an acute angle, or an obtuse angle. In addition, the chamfer types of the third corner 81 at different positions of the circumferential direction of the insulating and sealing structure 8 may be the same or different. For example, the third corner 81 on the entire periphery in the circumferential direction of the insulating and sealing structure 8 may be a rounded corner, or the third corner 81 on the entire periphery in the circumferential direction of the insulating and sealing structure 8 may be an angled chamfer, or the third corner 81 at some positions in the circumferential direction of the insulating and sealing structure 8 is a rounded corner, while at remaining positions is an angled chamfer, or the like.

Similarly, when the first corner 34 is formed as a chamfer, the form in which the first corner 34 is chamfered on the entire periphery may also be configured as described above. When the second corner 131 is formed as a chamfer, the form in which the second corner 131 is chamfered on the entire periphery may also be configured as described above.

In some embodiments, as shown in FIG. 11, the insulating and sealing structure 8 is formed in a track shape (also referred to as an oblong shape) surrounding the central axis L of the mounting hole 12. The track shape is formed by combining a rectangle and arc-shaped sides located on the short sides of the rectangle. At the connection position (for example, the position P shown in FIG. 11) between the long side and the arc-shaped side of the rectangle, the problem of cracking is less likely to occur, and the third corner 81 and the fourth corner 82 may not be provided with chamfers at corresponding connection positions.

In some embodiments, as shown in FIG. 11, the insulating and sealing structure 8 is formed in a track shape (also referred to as an oblong shape) surrounding the central axis L of the mounting hole 12. The track shape is formed by combining a rectangle and arc-shaped sides located on the short sides of the rectangle. The arc-shaped side may be in a rounded corner, and the long side may be in an angled chamfer. Alternatively, the arc-shaped side may be in an angled chamfer, and the long side may be in a rounded corner. As such, flexible designs with a plurality of forms can be achieved.

In some embodiments, a fitting gap is provided between the penetration part 33 and the insulating and sealing structure 8, such that the penetration part 33 is less likely to directly compress the insulating and sealing structure 8, thereby reducing the acting force transmitted to the insulating and sealing structure 8, reducing damage to the insulating and sealing structure 8, and protecting the insulating and sealing structure 8.

In some embodiments, as shown in FIG. 12, the insulating and sealing structure 8 includes a first portion 83 and a second portion 84 integrated into an integrated member. For example, as shown in FIG. 12, the first portion 83 and the second portion 84 constitute a first insulating and sealing member 85. The first insulating and sealing member 85 is a non-detachable integrated member. The material hardness of the first portion 83 is less than the material hardness of the second portion 84. The first portion 83 defines a third corner 81 and/or a fourth corner 82. That is, the first portion 83 includes a first sub-part 831 disposed proximal to the third corner 81 relative to the second portion 84, or the first portion 83 includes a second sub-part 832 disposed proximal to the fourth corner 82 relative to the second portion 84, or the first portion 83 includes a first sub-part 831 disposed proximal to the third corner 81 relative to the second portion 84 and a second sub-part 832 disposed proximal to the fourth corner 82 relative to the second portion 84.

When the first portion 83 includes the first sub-part 831, the material hardness of the first sub-part 831 is less than the material hardness of the second portion 84. When the post terminal 2 is assembled and fixed to the first housing wall 13, the post terminal 2 compresses the insulating and sealing structure 8. The insulating and sealing structure 8 is subject to a relatively large force at the position of the third corner 81 and is thus prone to cracking. By providing the first sub-part 831 having a lower material hardness than that of the second portion 84 at the third corner 81, the first sub-part 831 can be easily compressed and deformed under the force to absorb the force, thereby reducing the risk of cracking of the insulating and sealing structure 8 from the third corner 81.

When the first portion 83 includes the second sub-part 832, the material hardness of the second sub-part 832 is less than the material hardness of the second portion 84. When the post terminal 2 is assembled and fixed to the first housing wall 13, the post terminal 2 compresses the insulating and sealing structure 8, and correspondingly, the insulating and sealing structure 8 compresses the first housing wall 13. The first housing wall 13 applies a reaction force to the insulating and sealing structure 8, and the insulating and sealing structure 8 is subject to a relatively large reaction force from the second corner 131 of the first housing wall 13 at the fourth corner 82, such that the insulating and sealing structure is prone to cracking. By providing the second sub-part 832 having a lower material hardness than that of the second portion 84 at the fourth corner 82, the second sub-part 832 can be easily compressed and deformed under the force to absorb the force, thereby reducing the risk of cracking of the insulating and sealing structure 8 from the fourth corner 82.

It is worth noting that the materials of the first portion 83 and the second portion 84 are not limited and may be specifically selected according to actual requirements. For example, the material of the first portion 83 may be selected from a compressible rubber material or a plastic material, such as PFA (i.e., a perfluoroalkyl compound), or PP (i.e., polypropylene), or FKM (i.e., fluororubber), or EPDM (i.e., ethylene propylene diene monomer), thereby allowing the first portion 83 to exhibit good compressive deformation performance and effectively alleviate the problem of cracking. For example, the material of the second portion 84 may be selected from insulating materials with relatively high hardness, such as PPS (i.e., polyphenylene sulfide, a novel high-performance thermoplastic resin) or LCP (i.e., liquid crystal polymer), such that the second portion 84 exhibits good hardness and provides support, thereby enabling better control of the compression amount of the insulating and sealing structure 8 and improving the sealing performance.

It is worth noting that the first portion 83 may further include both the first sub-part 831 and the second sub-part 832, thereby more comprehensively reducing the risk of cracking of the insulating and sealing structure 8 at the weak position and improving the structural reliability of the insulating and sealing structure 8. In addition, it is worth noting that the materials of the first sub-part 831 and the second sub-part 832 may be the same or different, and may be specifically determined based on the actual situation.

In some embodiments of the present application, as shown in FIG. 9, the insulating and sealing structure 8 includes a first insulating and sealing member 85 defining the third corner 81 and the fourth corner 82, and a first gasket 91 is disposed between the first insulating and sealing member 85 and the first extending part 32. As such, when the post terminal 2 is mounted on the first housing wall 13 and the first extending part 32 compresses the first insulating and sealing member 85 toward the direction of the first housing wall 13 (for example, compressing the insulating and sealing structure 8 along the axial direction of the mounting hole 12), since the first gasket 91 is disposed between the first insulating and sealing member 85 and the first extending part 32, the first gasket 91 can reduce part of the acting force, thereby reducing the acting force transmitted to the first insulating and sealing member 85, and thus reducing the damage to the first insulating and sealing member 85 and protecting the first insulating and sealing member 85.

It is worth noting that the material hardness of the first gasket 91 and the material hardness of the first insulating and sealing member 85 are not limited. For example, the material hardness of the first gasket 91 may be greater than the material hardness of the first insulating and sealing member 85. As such, the first gasket 91 can better attenuate the compressive force transmitted to the first insulating and sealing member 85 and more effectively alleviate the problem of cracking of the first insulating and sealing member 85. For example, the first insulating and sealing member 85 may be a plastic member, and the first gasket 91 may be a metal member, such that the material hardness of the first gasket 91 may be greater than the material hardness of the first insulating and sealing member 85. Illustratively, the first gasket 91 may be made of steel, such as SUS304, SUS316, or SPCC, or made of aluminum, such as Al 1060.

It should be noted that when the first gasket 91 is provided, the third corner 81 may be provided with a chamfer or may not be provided with a chamfer. Illustratively, when the first gasket 91 is provided, the fourth corner 82 is provided with a chamfer, such that the problem of cracking at the third corner 81 and the fourth corner 82 can be alleviated.

In some embodiments of the present application, as shown in FIG. 9, the insulating and sealing structure 8 includes a first insulating and sealing member 85 defining the third corner 81 and the fourth corner 82. A second gasket 92 is disposed between the first insulating and sealing member 85 and the surface of the first housing wall 13 on a side facing the first extending part 32, and the material hardness of the second gasket 92 is less than the material hardness of the first insulating and sealing member 85. For example, when the first extending part 32 extends to the outer side of the outer surface of the first housing wall 13, the second gasket 92 is disposed between the first extending part 32 and the outer surface of the first housing wall 13. For another example, when the first extending part 32 extends to the inner side of the inner surface of the first housing wall 13, the second gasket 92 is disposed between the first extending part 32 and the inner surface of the first housing wall 13.

As such, when the post terminal 2 is mounted on the first housing wall 13 and the post terminal 2 compresses the first insulating and sealing member 85 toward the direction of the first housing wall 13 (for example, compressing the first insulating and sealing member 85 along the axial direction of the mounting hole 12), the first insulating and sealing member 85 can transmit the acting force to the second gasket 92. Due to its relatively low material hardness, the second gasket 92 can undergo compressive deformation to absorb the acting force, thereby reducing the reaction force fed back to the first insulating and sealing member 85, reducing the damage to the first insulating and sealing member 85, and protecting the first insulating and sealing member 85.

It should be noted that when the second gasket 92 is provided, the fourth corner 82 may be provided with a chamfer or may not be provided with a chamfer. Illustratively, when the second gasket 92 is provided, the third corner 81 is provided with a chamfer, such that the problem of cracking at the third corner 81 and the fourth corner 82 can be alleviated.

Illustratively, when at least one of the first gasket 91 and the second gasket 92 is provided, the third corner 81 and/or the fourth corner 82 of the first insulating and sealing member 85 may not be provided with the first portion 83, such that the structure and machining of the first insulating and sealing member 85 can be simplified. However, the present application is not limited thereto. For example, when at least one of the first gasket 91 and the second gasket 92 is provided, the third corner 81 and/or the fourth corner 82 of the first insulating and sealing member 85 may also be provided with the first portion 83, such that the problem of cracking of the first insulating and sealing member 85 can be better alleviated.

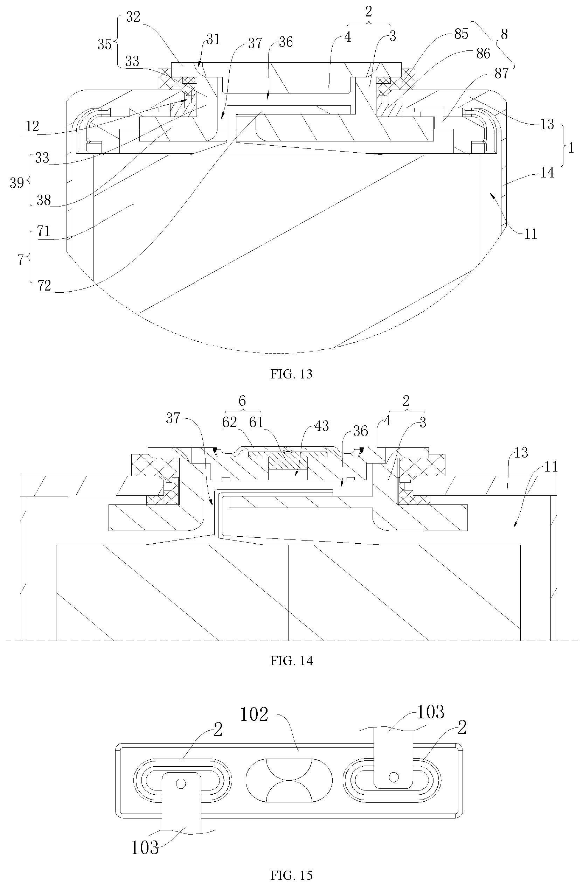

In some embodiments of the present application, as shown in FIG. 13, the post terminal 2 further includes a second extending part 38 connected to the penetration part 33 and extending toward a direction away from the central axis L of the mounting hole 12 relative to the penetration part 33. The second extending part 38 and the first extending part 32 extend to the inner side and the outer side of the first housing wall 13, respectively. For example, if the first extending part 32 extends to the outer side of the first housing wall 13, the second extending part 38 extends to the inner side of the first housing wall 13; and if the first extending part 32 extends to the inner side of the first housing wall 13, the second extending part 38 extends to the outer side of the first housing wall 13. The penetration part 33 and the second extending part 38 constitute a second post terminal part 39. The insulating and sealing structure 8 includes a second insulating and sealing member 86 fitted between the second post terminal part 39 and the first housing wall 13. The second insulating and sealing member 86 is disposed separately from the first insulating and sealing member 85. It can be understood that the first post terminal part 35 and the second post terminal part 39 share the penetration part 33.

As such, since the post terminal 2 includes the first extending part 32 and the second extending part 38 disposed on the inner side and the outer side of the first housing wall 13, respectively, the fit between the post terminal 2 and the first housing wall 13 can be more stable and secure. In addition, since the insulating and sealing structure 8 includes the first insulating and sealing member 85 and the second insulating and sealing member 86 that are disposed separately from each other, the first insulating and sealing member 85 and the second insulating and sealing member 86 may be independently mounted, thereby reducing the assembly difficulty and ensuring reliable insulating and sealing fit at all positions between the post terminal 2 and the first housing wall 13.

Besides, in some embodiments, with reference to FIG. 13, the insulating and sealing structure 8 may further include a third insulating and sealing member 87. The third insulating and sealing member 87 may be disposed between the second extending part 38 and the housing 1, and abut against the active substance-coated part 71 of the battery cell assembly 7. This configuration not only can improve the insulation between the battery cell assembly 7 and the housing 1, but also can enhance the stability of the fit between the battery cell assembly 7 and the housing 1, thereby improving the reliability of the battery cell 102. Alternatively, the third insulating and sealing member 87 may not be provided, and the end portion of the active substance-coated part 71 is sleeved with an insulating support (not shown in the drawing). The insulating support abuts against the inner surface of the housing 1, thereby facilitating the protection of the battery cell assembly 7 during the mounting of the battery cell assembly 7 in the housing 1, avoiding the scratching between the housing 1 and the battery cell assembly 7, and enhancing the insulation between the battery cell assembly 7 and the housing 1. Meanwhile, this configuration can improve the stability of the fit between the battery cell assembly 7 and the housing 1, thereby improving the reliability of the battery cell 102.

In some embodiments of the present application, as shown in FIG. 13, the post terminal 2 includes a post terminal body 3 and a post terminal cover plate 4. The post terminal body 3 includes a first post terminal part 35 and a second post terminal part 39. The first extending part 32 extends to the outer side of the outer surface of the first housing wall 13. The post terminal cover plate 4 lids the side of the first post terminal part 35 distal to the second post terminal part 39. The post terminal body 3 is connected to the post terminal cover plate 4 by welding. The material hardness of the second insulating and sealing member 86 is less than the material hardness of the first insulating and sealing member 85.

As such, the material hardness of the first insulating and sealing member 85 is greater than the material hardness of the second insulating and sealing member 86. The second insulating and sealing member 86 can be more easily compressed and deformed than the first insulating and sealing member 85, and exhibits a better sealing effect. However, the heat resistance of the first insulating and sealing member 85 is stronger than the heat resistance of the second insulating and sealing member 86. For example, in the case that the first insulating and sealing member 85 is a plastic member, and the second insulating and sealing member 86 is a rubber member, the thermal impact on the second insulating and sealing member 86 can be reduced as much as possible when the post terminal body 3 is welded to the post terminal cover plate 4, thereby improving the sealing reliability between the first housing wall 13 and the post terminal 2.

In some embodiments of the present application, as shown in FIG. 13, the first extending part 32 protrudes from the penetration part 33 toward the outer side of the first housing wall 13 to define a recess 31 between the first extending part 32 and the penetration part 33. The edge of the post terminal cover plate 4 is disposed in the recess 31 and is welded to the penetration part 33 in a penetrating manner. The welding structure formed by welding is spaced apart from the first extending part 32.

As such, the shrinkage stress generated by the solidification of the molten pool formed by welding can be blocked by the above spaced arrangement, making it difficult to or less likely to be transmitted to the first extending part 32, thereby helping to alleviate the problem of warping of the first extending part 32, enabling the first extending part 32 to compress the insulating and sealing structure 8, and thus improving the insulation and sealing effect. In addition, since the edge of the post terminal cover plate 4 is disposed in the recess 31 and is welded to the penetration part 33 in a penetrating manner, instead of being butt-welded to the first extending part 32, there is no need to ensure a small assembly gap between the edge of the post terminal cover plate 4 and the first extending part 32 for butt welding purposes. Therefore, a relatively large spacing may be allowed between the edge of the post terminal cover plate 4 and the first extending part 32, thereby improving the compatibility of the post terminal body 3 and thus helping to reduce the machining precision of the post terminal cover plate 4 and the post terminal body 3.

In some embodiments of the present application, as shown in FIG. 13, the battery cell 102 is provided with an accommodating cavity 11 on the inner side of the first housing wall 13. The post terminal 2 includes a post terminal body 3. The post terminal body 3 is provided with an accommodating groove 36 opening in a direction away from the accommodating cavity 11. The post terminal body 3 is provided with a communication hole 37. The communication hole 37 penetrates through the groove wall of the accommodating groove 36 on a side proximal to the accommodating cavity 11 and communicates the accommodating cavity 11 with the accommodating groove 36. For example, when the penetration part 33 is annular, the accommodating groove 36 is located in the inner ring region of the penetration part 33. For example, the accommodating groove 36 may be jointly defined by the penetration part 33 and a support part located in the inner ring region of the penetration part 33, and the communication hole 37 penetrates through the support part.

As such, when the electrolyte is injected into the battery cell 102, the electrolyte may be injected into the accommodating groove 36 and then flow toward the accommodating cavity 11 through the communication hole 37. In this case, the accommodating groove 36 can buffer the electrolyte, thereby alleviating problems such as electrolyte splashing and overflow. In addition, the side wall of the accommodating groove 36 (i.e., the groove wall of the accommodating groove 36 extending in the direction toward the accommodating cavity 11) can prevent the electrolyte from splashing out to some extent, thereby reducing the pollution of the outside caused by the electrolyte and facilitating rapid liquid injection. In addition, since there is no need to separately provide a liquid injection channel on the housing 1, the housing 1 is not required to be specially machined. This helps to reduce the structural complexity and machining difficulty of the housing 1.

Illustratively, as shown in FIG. 13, the side of the recess 31 facing the central axis L of the mounting hole 12 is open to be in communication with the accommodating groove 36. As such, the compactness of the fit between the post terminal body 3 and the post terminal cover plate 4 can be improved, and the structure and machining of the post terminal cover plate 4 can be simplified.

In some embodiments of the present application, as shown in FIG. 13, the battery cell 102 includes a battery cell assembly 7. The battery cell assembly 7 includes an active substance-coated part 71 received in the accommodating cavity 11 and a conductive part 72 connected to the active substance-coated part 71. The conductive part 72 is provided in the communication hole 37 in a penetrating manner to be at least partially received in the accommodating groove 36.

It is worth noting that one or more communication holes 37 may be provided, and the conductive part 72 may be provided in at least one of the communication holes 37 in a penetrating manner. Illustratively, at least one communication hole 37 can allow the electrolyte to pass through. For example, at least one communication hole 37 is vacant (i.e., the conductive part 72 is not provided therein in a penetrating manner), such that the electrolyte can pass through the communication hole without being hindered by the conductive part 72. For another example, the electrolyte may still be allowed to pass through even if the conductive part 72 is provided in at least one communication hole 37 in a penetrating manner.

As such, the conductive part 72 is at least partially received in the accommodating groove 36, such that the conductive part 72 at least partially occupies the space in the accommodating groove 36, thereby reducing the space occupied by the conductive part 72 in the accommodating cavity 11, and saving the space in the accommodating cavity 11 to accommodate a larger volume of the active substance-coated part 71. Therefore, an increase in the energy density of the battery cell 102 is facilitated or a reduction in the dimension of the battery cell 102 is facilitated under an unchanged energy density of the battery cell 102.

It can be understood that the active substance-coated part 71 may include a current collector coated with an active substance layer, and the conductive part 72 may include a tab part only, or may include a tab part, an adapting piece electrically connected to the tab part, or the like, which is not limited here.

In some embodiments, the conductive part 72 is welded to the post terminal body 3 to form the electrical connection, thereby enabling the electrode output of the battery cell assembly 7 from the post terminal body 3. Illustratively, as shown in FIG. 13, by welding the conductive part 72 to the groove wall of the accommodating groove 36 on the side proximal to the accommodating cavity 11, the compactness of the fit can be improved, and the welding operation between the two can be facilitated. Certainly, the present application is not limited thereto. In other embodiments, the conductive part 72 may also be welded to the post terminal cover plate 4 to form the electrical connection, which is not limited here.

In some embodiments of the present application, as shown in FIG. 14, the post terminal 2 includes a post terminal cover plate 4 lidding the post terminal body 3. The post terminal cover plate 4 is provided with a liquid injection hole 43 capable of communicating with the accommodating groove 36. The battery cell 102 further includes a sealing structure 6 configured to seal the liquid injection hole 43.

In this way, when the electrolyte is required to be injected into the battery cell 102, the sealing structure 6 is not first mounted at the liquid injection hole 43, or the sealing structure 6 is in a state in which the liquid injection hole 43 is open, and in this case, the electrolyte may be injected into the accommodating groove 36 through the liquid injection hole 43. Moreover, after liquid injection, the sealing structure 6 may be mounted at the liquid injection hole 43, or the sealing structure 6 is switched to a state of closing the liquid injection hole 43, thereby sealing and closing the liquid injection hole 43 to prevent the electrolyte from overflowing and prevent external foreign matters from entering the accommodating cavity 11 from the liquid injection hole 43, and thus improving the reliability of the battery cell 102.

As such, by machining the liquid injection hole 43 on the post terminal cover plate 4 with a relatively small opening and a location near the edge of the post terminal cover plate, reliable sealing of the liquid injection inlet can be achieved relatively easily through the sealing structure 6, thereby improving the working reliability of the battery cell 102 and enabling flexible and diverse designs of the sealing structure 6.

In some embodiments, as shown in FIG. 14, the post terminal cover plate 4 is not provided with a portion that stops on the outer side (i.e., a side distal to the accommodating cavity 11) of the sealing structure 6, such that the sealing structure 6 is suitable to be mounted to the post terminal cover plate 4 from the outer side (i.e., the side distal to the accommodating cavity 11) of the post terminal cover plate 4. In this way, by arranging the sealing structure 6 to be mounted to the post terminal cover plate 4 from the outer side of the post terminal cover plate 4, the liquid injection hole 43 can be sealed, such that the sealing structure 6 is allowed to be mounted after liquid injection, thereby ensuring the sealing performance of the liquid injection hole 43. In addition, the mounting position is proximal to the outer side, which facilitates the rapid assembly of the sealing structure 6. Moreover, the mounting of the sealing structure 6 has no adverse influence on the connection between the post terminal body 3 and the post terminal cover plate 4, which ensures the reliability of the connection between the post terminal cover plate 4 and the post terminal body 3.

The sealing structure 6 may be in a detachable form or a non-detachable fixed form. Illustratively, when the sealing structure 6 is in a detachable form, it is beneficial to the maintenance of the liquid injection hole 43. For example, when the electrolyte is required to be replenished, the sealing structure 6 can be detached, the liquid injection hole 43 is opened, the electrolyte is replenished and injected into the accommodating cavity 11 through the liquid injection hole 43, and then the sealing structure 6 is mounted back. For example, the sealing structure 6 can be detachably connected to the post terminal cover plate 4 by means of a thread, a rotary buckle, or the like, thereby facilitating the disassembly and assembly.

Illustratively, when the sealing structure 6 is in a non-detachable fixed form, the sealing structure 6 may be fixed to the post terminal cover plate 4 by welding, riveting, or the like, thereby improving the sealing reliability of the sealing structure 6 for the liquid injection hole 43. For example, the liquid injection hole 43 may be in a multi-segment form, and the sealing structure 6 may include a first sealing member 61 being in interference fit with the liquid injection hole 43 and a second sealing member 62 covering the outside of the first sealing member 61 and being welded to the post terminal cover plate 4.

Alternatively, in some embodiments, the second sealing member 62 may be configured to be detachably connected to the post terminal cover plate 4 by means of a rotary buckle, so as to limit the first sealing member 61 at the position in which the first sealing member 61 is in interference fit with the liquid injection hole 43.

In some embodiments of the present application, as shown in FIG. 14, the sealing structure 6 is at least partially embedded in the liquid injection hole 43. That is, the sealing structure 6 may be entirely embedded in the liquid injection hole 43, or the sealing structure 6 may be only partially embedded in the liquid injection hole 43. As such, in one aspect, the space in the liquid injection hole 43 can be fully utilized to improve the sealing reliability of the sealing structure 6 for the liquid injection hole 43; in another aspect, the height of the sealing structure 6 protruding from the outside of the liquid injection hole 43 can be reduced to decrease the space occupied by the sealing structure 6 outside the post terminal cover plate 4, which is beneficial to reduce the interference impact on the busbar component 103, increase the connection area between the busbar component 103 and the post terminal cover plate 4, and improve the current passage efficiency.

In some embodiments of the present application, as shown in FIG. 14, the first housing wall 13 is an integrally formed cover plate. Alternatively, as shown in FIG. 13, the housing 1 further includes second housing walls 14. The first housing wall 13 and at least one second housing wall 14 are integrally formed, and the second housing walls 14 extend toward a side of the first housing wall 13 in a thickness direction. As such, the flexible design of the structural position of the post terminal 2 can be achieved, thereby expanding the application range of the battery cell 102 according to the embodiments of the present application.

It is worth noting that the second housing wall 14 may extend out from the edge of the first housing wall 13. When the first housing wall 13 is rectangular, at least one of the four edges of the first housing wall 13 may extend out from the second housing wall 14. For example, only one edge of the first housing wall 13 extends out from the second housing wall 14, or only two edges of the first housing wall 13 may extend out from the second housing wall 14, or three edges of the first housing wall 13 may extend out from the second housing wall 14, or all four edges of the first housing wall 13 may extend out from the second housing wall 14. Illustratively, when the housing 1 is a rectangular housing, any wall surface of the rectangular housing may serve as the first housing wall 13.

For example, the housing 1 may include a housing body and a cover plate. The housing body defines a space with one side open, and the cover plate is disposed on the open side of the housing body to form the accommodating cavity 11 between the housing body and the cover plate. In this case, the surface of the housing body on a side opposite to the cover plate serves as the first housing wall 13, and the wall surface of the housing body connected between the first housing wall 13 and the cover plate serves as the second housing wall 14; or, the surface of the housing body on a side opposite to the cover plate serves as the second housing wall 14, and the wall surface of the housing body connected between the second housing wall 14 and the cover plate serves as the first housing wall 13; or, the cover plate serves as the first housing wall 13.

According to the embodiments of the second aspect of the present application, the embodiments of the present application further provide a battery 100. The battery includes the battery cell 102 according to any one of the above solutions. It is worth noting that the battery 100 according to the embodiments of the present application may include a case, or may not include a case. As such, the reliability of the battery cell 102 according to the embodiments of the present application is improved, thereby facilitating the improvement of the performance of the battery 100.

Illustratively, as shown in FIG. 15, the battery 100 may further include busbar components 103. A plurality of battery cells 102 are provided, and at least two of the battery cells are electrically connected by the busbar component 103. As such, the plurality of battery cells 102 may be connected in series and/or in parallel. For example, when the plurality of battery cells 102 are connected in series, the post terminal cover plate 4 of the anode of one battery cell 102 is connected to the post terminal cover plate 4 of the cathode of the next battery cell 102 through one busbar component 103. Meanwhile, the post terminal cover plate 4 of the cathode of the battery cell 102 is connected to the post terminal cover plate 4 of the anode of the previous battery cell 102 through another busbar component 103.

According to the embodiments of the third aspect of the present application, the embodiments of the present application further provide an electric device. The electric device includes the battery 100 according to any one of the above solutions. The battery 100 is configured to provide electric energy for the electric device. The electric device may be any one of the aforementioned devices or systems that use the battery 100. Since the performance of the battery 100 is improved, it helps to improve the operational electrical performance of the electric device.

A battery cell 102 according to a specific embodiment of the present application is described below.

The battery cell 102 includes a housing 1, a post terminal 2, and an insulating and sealing structure 8. The housing 1 includes a first housing wall 13. The first housing wall 13 is provided with a mounting hole 12, and the post terminal 2 includes a penetration part 33 provided in the mounting hole 12 in a penetrating manner, a first extending part 32 connected to the penetration part 33 and extending toward a direction away from the central axis L of the mounting hole 12 relative to the penetration part 33, and a second extending part 38 connected to the penetration part 33 and extending toward a direction away from the central axis L of the mounting hole 12 relative to the penetration part 33. The first extending part 32 extends to the outer side of the outer surface of the first housing wall 13, and the second extending part 38 extends to the inner side of the inner surface of the first housing wall 13. The first extending part 32 is formed by the post terminal 2 through flanging and riveting.

The penetration part 33 and the first extending part 32 constitute a first post terminal part 35, and the insulating and sealing structure 8 includes a first insulating and sealing member 85 fitted between the first post terminal part 35 and the first housing wall 13. The penetration part 33 and the second extending part 38 constitute a second post terminal part 39, and the insulating and sealing structure 8 includes a second insulating and sealing member 86 fitted between the second post terminal part 39 and the first housing wall 13 and disposed separately from the first insulating and sealing member 85.

A joint between the first extending part 32 and the penetration part 33 is provided with a first corner 34 disposed facing the first housing wall 13. The first housing wall 13 includes a second corner 131 disposed corresponding to the first corner 34. The first insulating and sealing member 85 includes a third corner 81 disposed corresponding to the first corner 34 and a fourth corner 82 disposed corresponding to the second corner 131. At least one of the first corner 34 and the third corner 81 is formed as a chamfer, and at least one of the second corner 131 and the fourth corner 82 is formed as a chamfer.

During assembly, the first insulating and sealing member 85, the second insulating and sealing member 86, and the post terminal 2 may be first mounted at the mounting hole 12 of the first housing wall 13, and then the first extending part 32 is machined by using a riveting process. In this case, the post terminal 2 applies an acting force to the first insulating and sealing member 85, and correspondingly, the first housing wall 13 applies a reaction force to the first insulating and sealing member 85. The force applied on the position of the first insulating and sealing member 85 corresponding to the first corner 34 and/or the second corner 131 is relatively concentrated, and the position is a weak position that is prone to cracking. By forming at least one of the first corner 34 and the third corner 81 as a chamfer and forming at least one of the second corner 131 and the fourth corner 82 as a chamfer, the force applied to the third corner 81 and the fourth corner 82 can be dispersed, thereby reducing the risk of cracking of the first insulating and sealing member 85 from the positions of the third corner 81 and the fourth corner 82.

It should be noted that unless conflicting, the embodiments and features of the embodiments in the present application may be combined with each other.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery cell, comprising:
a first housing wall, wherein the first housing wall is provided with a mounting hole;
a post terminal, comprising a penetration part provided in the mounting hole in a penetrating manner and a first extending part connected to the penetration part and extending toward a direction away from a central axis of the mounting hole relative to the penetration part, wherein the first extending part extends to an outer side of an outer surface or an inner side of an inner surface of the first housing wall, a joint between the first extending part and the penetration part is provided with a first corner disposed facing the first housing wall, and the first housing wall comprises a second corner disposed corresponding to the first corner; and
an insulating and sealing structure, fitted between the first housing wall and the post terminal and comprising a third corner disposed corresponding to the first corner and a fourth corner disposed corresponding to the second corner, wherein at least one of the first corner, the second corner, the third comer, and the fourth corner is formed as a chamfer.

2. The battery cell according to claim 1, wherein at least one of the first corner and the third corner is formed as a chamfer.

3. The battery cell according to claim 2, wherein the first corner and the third corner are both formed as chamfers of a same type.

4. The battery cell according to claim 3, wherein the first corner and the third corner are both formed as rounded corners, and a rounded corner radius of the third corner is greater than a rounded corner radius of the first corner.

5. The battery cell according to any one of claims 1-4, wherein a fitting gap is provided between the first corner and the third corner.

6. The battery cell according to any one of claims 1-5, wherein at least one of the second corner and the fourth corner is formed as a chamfer.

7. The battery cell according to claim 6, wherein the second corner and the fourth corner are both formed as chamfers of a same type.

8. The battery cell according to any one of claims 1-7, wherein a fitting gap is provided between the second corner and the fourth corner.

9. The battery cell according to any one of claims 1-8, wherein the third corner and the fourth corner are both formed as chamfers, with the third corner being formed as a rounded corner and the fourth corner being formed as an angled chamfer.

10. The battery cell according to any one of claims 1-9, wherein a fitting gap is provided between the penetration part and the insulating and sealing structure.

11. The battery cell according to any one of claims 1-10, wherein the post terminal is formed into the first extending part through flanging and riveting.

12. The battery cell according to any one of claims 1-11, wherein the insulating and sealing structure comprises a first portion and a second portion integrated into an integrated member, a material hardness of the first portion is less than a material hardness of the second portion, and the first portion defines the third corner and/or the fourth corner.

13. The battery cell according to any one of claims 1-12, wherein the insulating and sealing structure comprises a first insulating and sealing member defining the third corner and the fourth corner, wherein a first gasket is disposed between the first insulating and sealing member and the first extending part, and/or a second gasket is disposed between the first insulating and sealing member and a surface of the first housing wall on a side facing the first extending part, and a material hardness of the second gasket is less than a material hardness of the first insulating and sealing member.

14. The battery cell according to any one of claims 1-13, wherein the post terminal further comprises a second extending part connected to the penetration part and extending toward the direction away from the central axis of the mounting hole relative to the penetration part, the second extending part and the first extending part extend to the inner side and the outer side of the first housing wall, respectively, the penetration part and the first extending part constitute a first post terminal part, the penetration part and the second extending part constitute a second post terminal part, the insulating and sealing structure comprises the first insulating and sealing member fitted between the first post terminal part and the first housing wall and a second insulating and sealing member fitted between the second post terminal part and the first housing wall, and the second insulating and sealing member is disposed separately from the first insulating and sealing member.

15. The battery cell according to claim 14, wherein the post terminal comprises a post terminal body and a post terminal cover plate, the post terminal body comprises the first post terminal part and the second post terminal part, the first extending part extends to the outer side of the outer surface of the first housing wall, the post terminal cover plate lids a side of the first post terminal part distal to the second post terminal part, the post terminal body is connected to the post terminal cover plate by welding, and a material hardness of the second insulating and sealing member is less than the material hardness of the first insulating and sealing member.

16. The battery cell according to claim 15, wherein the first extending part protrudes from the penetration part toward the outer side of the first housing wall to define a recess between the first extending part and the penetration part, an edge of the post terminal cover plate is disposed in the recess and is welded to the penetration part in a penetrating manner, and a welding structure formed by welding is spaced apart from the first extending part.

17. The battery cell according to any one of claims 1-16, wherein the battery cell is provided with an accommodating cavity on the inner side of the first housing wall, the post terminal comprises the post terminal body, the post terminal body is provided with an accommodating groove opening in a direction away from the accommodating cavity, and the post terminal body is provided with a communication hole, and the communication hole penetrates through a groove wall of the accommodating groove on a side proximal to the accommodating cavity, and communicates the accommodating cavity with the accommodating groove.

18. The battery cell according to claim 17, wherein the battery cell comprises a battery cell assembly, the battery cell assembly comprises an active substance-coated part received in the accommodating cavity and a conductive part connected to the active substance-coated part, and the conductive part is provided in the communication hole in a penetrating manner to be at least partially received in the accommodating groove.

19. The battery cell according to any one of claims 17-18, wherein the post terminal comprises the post terminal cover plate lidding the post terminal body, the post terminal cover plate is provided with a liquid injection hole capable of communicating with the accommodating groove, and the battery cell further comprises a sealing structure configured to seal the liquid injection hole.

20. A battery, comprising the battery cell according to any one of claims 1-19.

21. An electric device, comprising the battery according to claim 20.
